# EUROPEAN PATENT APPLICATION

(11) **EP 4 607 362 A1**
(43) Date of publication of application: **27.08.2025**
(21) Application number: 23884816.2
(22) Date of filing: 30.10.2023
(51) Int. Cl.: G06F 13/42, G06F 9/48

(54) **CHIP SYSTEM AND COLLECTIVE COMMUNICATION METHOD**

(30) Priority: 31.10.2022 CN 202211349676
(71) Applicant: Huawei Technologies Co., Ltd., Shenzhen, Guangdong 518129 (CN)
(72) Inventor: LIU, Yanchen, Shenzhen, Guangdong 518129 (CN); ZHENG, Qiaoshi, Shenzhen, Guangdong 518129 (CN); CHEN, Zhipeng, Shenzhen, Guangdong 518129 (CN); LI, Sicong, Shenzhen, Guangdong 518129 (CN)
(74) Representative: Pfenning, Meinig & Partner mbB
(86) International application number: PCT/CN2023/127610
(87) International publication number: WO 2024/093885

(57) **Abstract**

Embodiments of this application provide a chip system and a collective communication method, and relate to the field of chip technologies. A specific solution is as follows: The chip system includes a processor core, a task scheduler, and a first accelerator. The processor core is configured to: orchestrate all tasks of collective communication in an expected execution sequence, to obtain an orchestrated execution sequence of the tasks, and deliver the orchestrated execution sequence of the tasks and a synchronization task to the task scheduler, where the synchronization task is used to control the orchestrated execution sequence of the tasks. The task scheduler is configured to: schedule the tasks to the first accelerator in the orchestrated execution sequence of the tasks, and control the orchestrated execution sequence of the tasks based on the synchronization task. The first accelerator is configured to execute the tasks in the orchestrated execution sequence of the tasks. In the chip system provided in this application, the processor core does not need to participate in a task execution process, so that computing efficiency of collective communication can be improved.

## Description

This application claims priority to Chinese Patent Application No. 202211349676.2, filed with the China National Intellectual Property Administration on October 31, 2022 and entitled "CHIP SYSTEM AND COLLECTIVE COMMUNICATION METHOD", which is incorporated herein by reference in its entirety.

### TECHNICAL FIELD

Embodiments of this application relate to the field of chip technologies, and in particular, to a chip system and a collective communication method.

### BACKGROUND

Message passing interface (message passing interface, MPI) communication includes point-to-point (point-to-point, P2P) communication and collective (collective) communication. At present, a collective communication algorithm usually has a requirement for sequential execution of P2P communication tasks included in the collective communication. Specifically, software may first receive a completion queue entry (completion queue entry, CQE) of a P2P communication task, and then the software delivers a subsequent P2P communication task, to ensure correctness of an execution sequence of a plurality of P2P communication tasks. An MPI supports non-blocking communication. In other words, the software performs computing in a communication process. Therefore, in a computing process, several unpredictable interrupts occur on a CQE of a work queue element (work queue element, WQE) in a receive queue (receive queue, RQ). As a result, a scheduling program of an operating system (operating system, OS) of the software is interfered, and OS noise is generated. In other words, interrupt overheads are generated during message receiving. In most scenarios, especially in a collective communication scenario, interrupt overheads and OS context switch overheads is much longer than a data processing time. This reduces computing efficiency of the software.

### SUMMARY

Embodiments of this application provide a chip system and a collective communication method. A processor core orchestrates all tasks, and a task scheduler schedules the tasks in an orchestrated execution sequence of the tasks, so that computing efficiency of collective communication can be improved.

To achieve the foregoing objectives, the following technical solutions are used in embodiments of this application.

According to a first aspect, an embodiment of this application provides a chip system. The chip system includes a processor core, a task scheduler, and a first accelerator. The processor core is configured to: orchestrate all tasks of collective communication in an expected execution sequence, to obtain an orchestrated execution sequence of the tasks, and deliver the orchestrated execution sequence of the tasks and a synchronization task to the task scheduler, where the synchronization task is used to control the orchestrated execution sequence of the tasks. The task scheduler is configured to: schedule the tasks to the first accelerator in the orchestrated execution sequence of the tasks, and control the orchestrated execution sequence of the tasks based on the synchronization task. The first accelerator is configured to execute the tasks in the orchestrated execution sequence of the tasks.

Therefore, the processor core delivers both the orchestrated execution sequence of the tasks and the synchronization task to the task scheduler, where the synchronization task may control the orchestrated execution sequence of the tasks, the task scheduler schedules the tasks to the first accelerator in the orchestrated execution sequence of the tasks, and the first accelerator executes the tasks in the orchestrated execution sequence of the tasks. Therefore, in a process of collective communication, the processor core participates only in the orchestration of the execution sequence of the tasks, and does not participate in an execution process of the tasks. The task scheduler may schedule the tasks to the first accelerator in the orchestrated execution sequence of the tasks. The first accelerator executes the tasks. Therefore, the processor core does not need to participate in the execution process of the tasks in the chip system provided in this embodiment of this application, so that computing efficiency of collective communication can be improved.

In a possible design, the task scheduler includes at least one submission queue, at least one completion queue, and a synchronization table. The processor core is configured to: deliver the orchestrated execution sequence of the tasks to the at least one submission queue, and deliver the synchronization task, where the synchronization task is used to update the synchronization table, the submission queue is used to deliver a task to the first accelerator, and the synchronization table is used to record a tag corresponding to any submission queue when a task in any submission queue is completed; and determine, based on a completion queue entry in the at least one completion queue, that execution of the task is completed.

In this design, the processor core delivers the orchestrated execution sequence of the tasks and the synchronization task to the at least one submission queue of the task scheduler, and the task scheduler and the first accelerator continue to process the tasks. The processor core reads, only after the task is completed, the completion queue entry in the at least one completion queue to determine that execution of the task is completed. The processor core does not need to participate in the execution process of the tasks, so that computing efficiency of collective communication can be improved.

In a possible design, the synchronization task includes a plurality of synchronization recording tasks and a plurality of synchronization waiting tasks. A single synchronization recording task in the plurality of synchronization recording tasks is used to record, in the synchronization table, a tag corresponding to a single submission queue in the at least one submission queue; and a single synchronization waiting task in the plurality of synchronization waiting tasks is used to read, in the synchronization table, a tag corresponding to an identifier of the single synchronization recording task, and determine whether execution of a task in the single submission queue is completed.

In this design, the synchronization task is set in the task scheduler, so that the orchestrated execution sequence of the tasks may be controlled. In this way, execution of a subsequent task is continued when the task is completed, or execution of a subsequent task is blocked when the task is not completed. The processor core does not need to participate in an entire process, so that computing efficiency of collective communication can be improved.

In a possible design, the task scheduler further includes a scheduler interface and a tag matching engine, and the scheduler interface corresponds to the first accelerator. The task scheduler is configured to: control a first submission queue in the at least one submission queue to deliver a task corresponding to the first submission queue to the first accelerator through the scheduler interface; when determining that the first accelerator completes execution of the task corresponding to the first submission queue, control the tag matching engine to execute a first synchronization recording task in the plurality of synchronization recording tasks in the synchronization table, and write a first completion queue entry into the completion queue, where the first synchronization recording task is to record, in the synchronization table, a first tag corresponding to the first submission queue; determine, based on the first tag in the synchronization table, whether a first synchronization waiting task in the plurality of synchronization waiting tasks is successfully executed, and when determining that the first synchronization waiting task is not successfully executed, block a task subsequent to the task corresponding to the first submission queue; and when determining, based on a tag corresponding to the at least one submission queue, that all the tasks are successfully executed, schedule and execute a next task of a task corresponding to the at least one submission queue.

In a possible design, the all tasks include an inter-chip task and an intra-chip task, and the chip system further includes a second accelerator. The first accelerator is configured to execute the inter-chip task in the orchestrated execution sequence of the tasks. The second accelerator is configured to execute the intra-chip task in the orchestrated execution sequence of the tasks.

In this design, the chip system provided in this embodiment of this application may execute the inter-chip task through the first accelerator, and execute the intra-chip task through the second accelerator. The chip system may support both intra-chip and inter-chip collective communication, thereby improving applicability of the chip system.

According to a second aspect, an embodiment of this application provides a collective communication method, where the collective communication method is applied to a chip system, the chip system includes a processor core, a task scheduler, and a first accelerator, and the method includes: The processor core orchestrates all tasks of collective communication in an expected execution sequence, to obtain an orchestrated execution sequence of the tasks, and delivers the orchestrated execution sequence of the tasks and a synchronization task to the task scheduler, where the synchronization task is used to control the orchestrated execution sequence of the tasks; the task scheduler schedules the tasks to the first accelerator in the orchestrated execution sequence of the tasks, and controls the orchestrated execution sequence of the tasks based on the synchronization task; and the first accelerator executes the tasks in the orchestrated execution sequence of the tasks.

For beneficial effect of the second aspect, refer to the description of the first aspect.

In a possible design, the task scheduler includes at least one submission queue, at least one completion queue, and a synchronization table; and that the processor core orchestrates all tasks of collective communication in an expected execution sequence, to obtain an orchestrated execution sequence of the tasks, and delivers the orchestrated execution sequence of the tasks and a synchronization task to the task scheduler, where the synchronization task is used to control the orchestrated execution sequence of the tasks includes: The processor core delivers the orchestrated execution sequence of the tasks to the at least one submission queue, and delivers the synchronization task, where the synchronization task is used to update the synchronization table, the submission queue is used to deliver a task to the first accelerator, and the synchronization table is used to record a tag corresponding to any submission queue when a task in any submission queue is completed; and the processor core determines, based on a completion queue entry in the at least one completion queue, that execution of the task is completed.

In a possible design, the synchronization task includes a plurality of synchronization recording tasks and a plurality of synchronization waiting tasks. A single synchronization recording task in the plurality of synchronization recording tasks is used to record, in the synchronization table, a tag corresponding to a single submission queue in the at least one submission queue; and a single synchronization waiting task in the plurality of synchronization waiting tasks is used to read, in the synchronization table, a tag corresponding to an identifier of the single synchronization recording task, and determine whether execution of a task in the single submission queue is completed.

In a possible design, the task scheduler further includes a scheduler interface and a tag matching engine, and the scheduler interface corresponds to the first accelerator; and that the task scheduler schedules the tasks to the first accelerator in the orchestrated execution sequence of the tasks, and controls the orchestrated execution sequence of the tasks based on the synchronization task includes: The task scheduler controls a first submission queue in the at least one submission queue to deliver a task corresponding to the first submission queue to the first accelerator through the scheduler interface; when determining that the first accelerator completes execution of the task corresponding to the first submission queue, the task scheduler controls the tag matching engine to execute a first synchronization recording task in the plurality of synchronization recording tasks in the synchronization table, and writes a first completion queue entry into the completion queue, where the first synchronization recording task is to record, in the synchronization table, a first tag corresponding to the first submission queue; the task scheduler determines based on the first tag in the synchronization table, whether a first synchronization waiting task in the plurality of synchronization waiting tasks is successfully executed, and when determining that the first synchronization waiting task is not successfully executed, blocks a task subsequent to the task corresponding to the first submission queue; and when determining, based on a tag corresponding to the at least one submission queue, that all the tasks are successfully executed, the task scheduler schedules and executes a next task of a task corresponding to the at least one submission queue.

In a possible design, the all tasks include an inter-chip task and an intra-chip task, and the chip system further includes a second accelerator; the first accelerator executes the inter-chip task in the orchestrated execution sequence of the tasks; and the second accelerator executes the intra-chip task in the orchestrated execution sequence of the tasks.

According to a third aspect, an embodiment of this application provides a computer-readable storage medium, including computer instructions. When the computer instructions are run on an electronic device, the electronic device is enabled to perform the collective communication method according to any one of the foregoing aspects and the possible implementations.

According to a fourth aspect, an embodiment of this application provides a computer program product. When the computer program product runs on a computer or a processor, the computer or the processor is enabled to perform the collective communication method according to any one of the foregoing aspects and the possible implementations.

It may be understood that the chip system, the computer-readable storage medium, the computer program product, or the like provided above may be applied to the corresponding method provided above. Therefore, for beneficial effects that can be achieved by the chip system, the computer-readable storage medium, or the computer program product, refer to the beneficial effects in the corresponding method. Details are not described herein again.

These aspects or other aspects in this application are more concise and comprehensible in the following descriptions.

### BRIEF DESCRIPTION OF DRAWINGS

FIG. 1 is a diagram of a structure of a collective communication architecture according to an embodiment of this application;
FIG. 2 is a diagram of a structure of another collective communication architecture according to an embodiment of this application;
FIG. 3 is a diagram of a structure of a queue in collective communication according to an embodiment of this application;
FIG. 4 is a diagram of a location of a pointer in other collective communication according to an embodiment of this application;
FIG. 5 is a diagram of a structure of a chip system according to an embodiment of this application;
FIG. 6 is a diagram of a structure of another chip system according to an embodiment of this application;
FIG. 7 is a flowchart of executing an inter-chip task according to an embodiment of this application;
FIG. 8 is a flowchart of executing an inter-chip task and an intra-chip task according to an embodiment of this application;
FIG. 9 is a flowchart of a collective communication method according to an embodiment of this application; and
FIG. 10 is a flowchart of another collective communication method according to an embodiment of this application.

### DESCRIPTION OF EMBODIMENTS

For ease of understanding, the following uses examples to describe some concepts related to embodiments of this application for reference. Details are as follows:

Collective communication is an operation that implements data sharing and data transmission among a plurality of nodes. The collective communication includes global specifications, broadcast, and synchronization. In a collective communication method, a network device needs to establish a connection to a terminal device. When the terminal device needs to send collective communication data to the network device, the terminal device constructs the collective communication data through the connection established by the network device, and then the terminal device sends constructed collective communication data to the network device. Similarly, when the network device needs to send a collective communication packet to the terminal device, the network device constructs the collective communication data through the connection established between the network device and the terminal device, and then the network device sends a constructed collective communication packet to the terminal device.

In a notify (Notify) technology, a notified party of a task saves an operation to be performed when the task occurs in a synchronization table in a form of a function pointer. When the task occurs, a notifier executes a callback function of each element in the synchronization table in sequence, to complete notifying.

A queue (queue) is a linear table. The queue has a "first in first out" feature, and supports insertion at one end and removal at the other end. A new task enqueues (push) at a rear (rear) of the queue, and a task that dequeues (pop) the queue is a task at the front (front) of the queue.

A remote direct memory access (remote direct memory access, RDMA) technology is a remote direct data access technology. The RDMA directly transfers data to a storage area of a computer via a network, and quickly moves the data from a system to a remote system memory without affecting an operating system. Therefore, the RDMA technology does not need to use a processing function of the computer.

The following describes the technical solutions in embodiments of this application with reference to the accompanying drawings in embodiments of this application. In the descriptions of embodiments of this application, "/" means "or" unless otherwise specified. For example, "A/B" may represent A or B. In this specification, "and/or" describes only an association relationship for describing associated objects and represents that three relationships may exist. For example, "A and/or B" may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In descriptions of embodiments, unless otherwise specified, "a plurality of" means two or more.

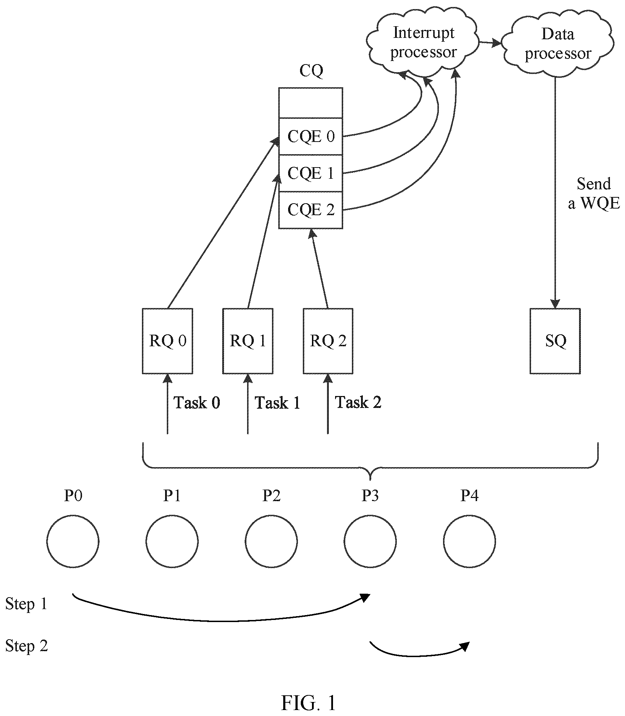

A current collective communication architecture is shown in FIG. 1. FIG. 1 is a diagram of a structure of a collective communication architecture according to an embodiment of this application. The collective communication architecture may be applied to a plurality of network adapters, and the network adapters may be P0, P1, P2, P3, and P4. A process of collective communication includes step 1 and step 2. Collective communication of P3 is used as an example. P3 includes a plurality of RQs: an RQ 0, an RQ 1, and an RQ 2. Step 1: Store a task 0 corresponding to P0 in the RQ 0, store a task 1 corresponding to P1 in the RQ 1, and store a task 2 corresponding to P2 in the RQ 2. After the tasks are completed, a CQE 0, a CQE 1, and a CQE 2 are written into a completion queue (completion queue, CQ) of P3. Several unpredictable interrupts occur on each CQE. Step 2: An interrupt processor processes the generated interrupts, and then transmits data to a data processor for processing. Processed data is stored in a send queue (send queue, SQ), and is sent to P4 from the SQ. Because the interrupts are processed in the current collective communication architecture, an interrupt processing time is much longer than a data processing time. This reduces computing efficiency of the network adapter.

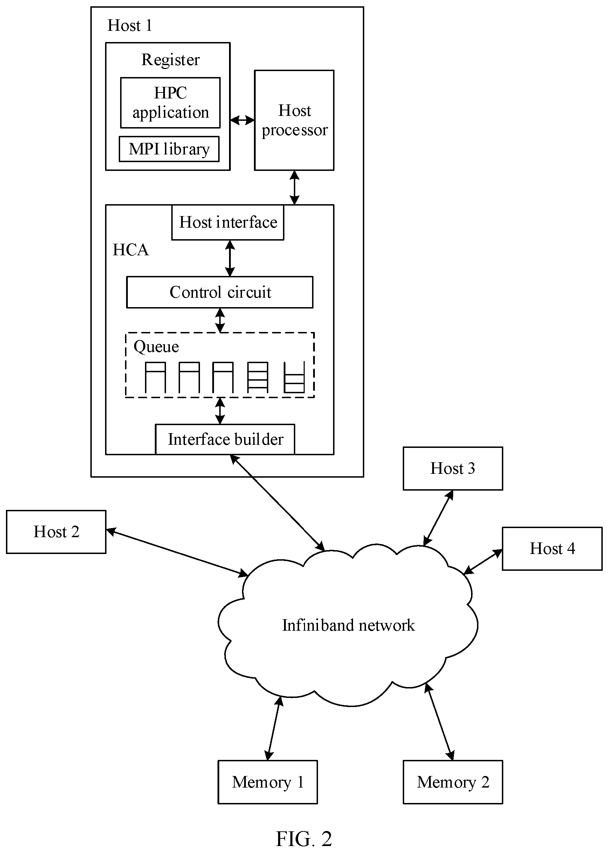

In addition, in the conventional technology, collective communication offloading is implemented in the network adapter. FIG. 2 is a diagram of a structure of another collective communication architecture according to an embodiment of this application. The collective communication architecture may be applied to a plurality of hosts (hosts) or memories (storages), and the plurality of hosts and the memories communicate with each other via an infiniband network (infiniband network). The hosts include a host 1, a host 2, a host 3, a host 4, and the like, and the memories include a memory 1, a memory 2, and the like. An internal architecture of the host 1 is used as an example. The host 1 includes a register (memory), a host processor (host processor), and a host channel adapter (host channel adapter, HCA). The register includes a high-performance computing (high-performance computing, HPC) application and a message passing interface (message passing interface, MPI) library (library). The HCA includes a host interface (host interface), a control circuit (control circuit), a queue (queue), and an interface builder (interface builder, IB).

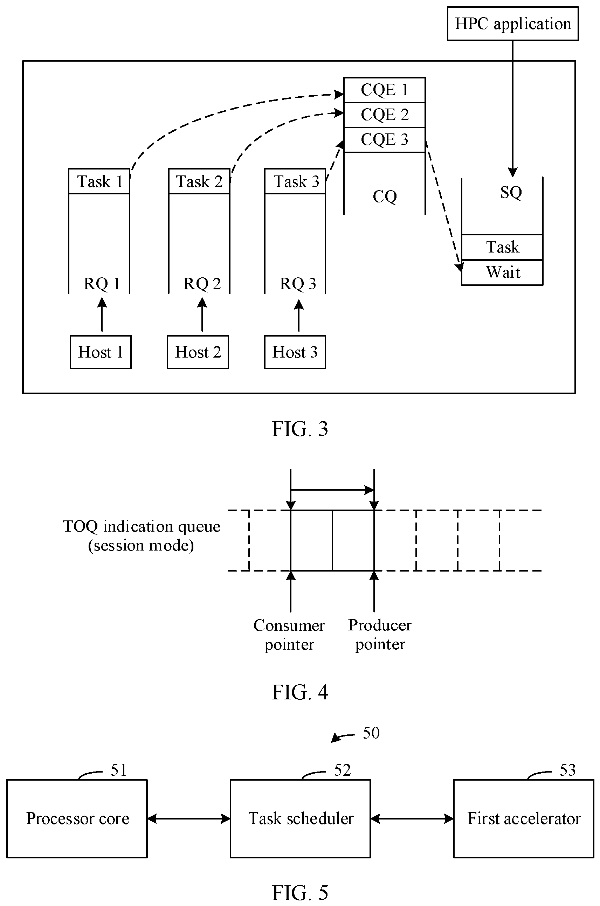

In the collective communication architecture, a queue is shown in FIG. 3. FIG. 3 is a diagram of a structure of a queue in collective communication according to an embodiment of this application. The queue includes an SQ, an RQ, and a CQ. The RQ includes an RQ 1, an RQ 2, and an RQ 3. The task 1 of the host 1 is temporarily stored in the RQ 1, the task 2 of the host 2 is temporarily stored in the RQ 2, the task 3 of the host 3 is temporarily stored in the RQ 3, and the completion queue entries CQE 1, CQE 2, and CQE 3 are placed in the CQ by the RQ. A WQE of a wait (wait) type can be placed in the SQ, and a counting function of the CQE is implemented in the control circuit. When CQE counts reach a threshold, a wait blocking is relieved, and execution of a communication or computing task after a wait can be continued.

In addition, collective communication in the network adapter further includes another manner. FIG. 4 is a diagram of a location of a pointer in other collective communication according to an embodiment of this application. In this manner, a scheduling pointer (scheduling pointer) is added on the basis of a consumer pointer (consumer pointer) and a producer pointer (producer pointer) of a TOQ. In a session mode (session mode), the consumer pointer can only be executed to the scheduling pointer, and a movement of the scheduling pointer depends on execution of a WQE in an SQ of a local end or a peer end.

However, the architecture in the conventional technology can only implement collective communication offloading between network adapters, in other words, can only implement collective communication offloading between chips (chips). However, with development of a multi-core central processing unit (central processing unit, CPU), cores (cores) of the CPU are increasing, and a plurality of non-uniform memory access (non-uniform memory access, NUMA) domains also appear. As a result, intra-chip collective communication is also a common scenario. However, the conventional technology does not support the intra-chip collective communication scenario, and intra-chip collective communication can only be implemented by using software. An existing collective communication offloading solution is not enough either. In addition, an interrupt is generated in existing inter-chip collective communication, which affects computing efficiency of collective communication.

Therefore, this application provides a new chip system. The chip system includes a processor core, a task scheduler, and a first accelerator. In embodiments of this application, the processor core orchestrates all tasks of collective communication in an expected execution sequence, then the task scheduler schedules the tasks to the first accelerator in an orchestrated execution sequence of the tasks, and the first accelerator executes the tasks in the orchestrated execution sequence of the tasks. This can improve computing efficiency of collective communication.

The chip system in this application may be used in a CPU, a graphics processing unit (graphics processing unit, GPU), a data processing unit (data processing unit, DPU), an artificial intelligence (artificial intelligence, AI) processor, a communication processor, and the like.

Based on the description of the chip system provided in this application, the following further describes the chip system provided in this application.

An embodiment of this application provides a chip system 50. FIG. 5 is a diagram of a structure of a chip system according to an embodiment of this application. The chip system includes a processor core 51, a task scheduler 52, and a first accelerator 53.

The processor core 51 is configured to: orchestrate all tasks of collective communication in an expected execution sequence, to obtain an orchestrated execution sequence of the tasks, and deliver the orchestrated execution sequence of the tasks and a synchronization task to the task scheduler, where the synchronization task is used to control the orchestrated execution sequence of the tasks. The task scheduler 52 is configured to: schedule the tasks to the first accelerator 53 in the orchestrated execution sequence of the tasks, and control the orchestrated execution sequence of the tasks based on the synchronization task. The first accelerator 53 is configured to execute the tasks in the orchestrated execution sequence of the tasks.

In an example, all the tasks of the collective communication may come from an application (application, APP), and the processor core 51 orchestrates all the tasks in the expected execution sequence, to obtain the orchestrated execution sequence of the tasks. The expected execution sequence may be a generation time sequence of the tasks, or the expected execution sequence may be a priority sequence of the tasks.

In addition, the synchronization task may be a notify task.

In an example, the processor core 51 may be a system on chip (system on a chip, SoC), and the processor core 51 may include a processor, a memory, and an input/output (input/output, I/O) interface. The processor may be a single-core processor or a multi-core processor. The processor may process data after loading the data and an APP in the memory. The first accelerator 53 may be an RDMA, and the RDMA may be coupled to a plurality of hosts through an infiniband network.

In addition, the task scheduler 52 and the first accelerator 53 may exist independently, or the task scheduler 52 may be disposed in the first accelerator 53. This is not limited herein.

The processor core 51 delivers both the orchestrated execution sequence of the tasks and the synchronization task to the task scheduler 52. The synchronization task may control the orchestrated execution sequence of the tasks. The task scheduler 52 schedules the tasks to the first accelerator 53 in the orchestrated execution sequence of the tasks, and the first accelerator 52 executes tasks in the orchestrated execution sequence of the tasks. Therefore, in a process of collective communication, the processor core 51 core participates only in the orchestration of the execution sequence of the tasks, and does not participate in an execution process of the tasks. The task scheduler 52 may schedule the tasks to the first accelerator 53 in the orchestrated execution sequence of the tasks. The first accelerator 53 executes the tasks. Therefore, the processor core 51 does not need to participate in the execution process of the tasks in the chip system provided in this embodiment of this application, so that computing efficiency of collective communication can be improved.

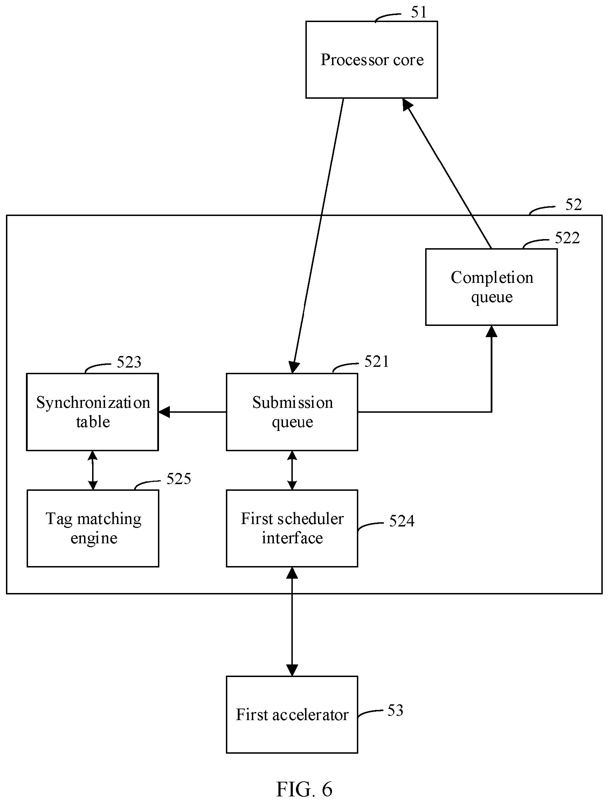

Optionally, FIG. 6 is a diagram of a structure of another chip system according to an embodiment of this application. The task scheduler 52 may include at least one submission queue 521, at least one completion queue 522, and a synchronization table 523. The processor core 51 is configured to: deliver the orchestrated execution sequence of the tasks to the at least one submission queue 521, and deliver the synchronization task, where the synchronization task is used to update the synchronization table 523, the submission queue 521 is used to deliver a task to the first accelerator 53, and the synchronization table 523 is used to record a tag corresponding to any submission queue 521 when a task in any submission queue 521 is completed. The processor core 51 is further configured to determine, based on a completion queue entry in the at least one completion queue;522, that execution of the task is completed.

The submission queue 521 may be a queue in which the processor core 51 delivers a task to the task scheduler 52, and the completion queue 522 may be a queue in which the first accelerator 53 notifies the processor core 51 of completion of execution of a task.

In addition, the synchronization table may be a notify table.

For example, the processor core 51 may further include a task scheduler drive interface. The task scheduler drive interface is configured to drive the task scheduler 52. The processor core 51 delivers the orchestrated execution sequence of the tasks to the at least one submission queue 521 through the task scheduler drive interface. The submission queue 521 is coupled to the first accelerator 53, and the submission queue 521 is further coupled to the synchronization table 53. The synchronization table 53 controls the submission queue 521 to deliver the tasks to the first accelerator 53 in the orchestrated execution sequence of the tasks. The first accelerator 53 may be coupled to another host through an infiniband network. The first accelerator 53 may access a memory of the another host. After completing a task, the another host sends data to the first accelerator 53. When a task in any submission queue 521 is completed, the synchronization table 523 records, in the synchronization table 523, a tag (flag) corresponding to the task in the submission queue 521. At the same time, the task scheduler 52 writes a completion queue entry into the completion queue 522, and the completion queue 522 is coupled with the processor core 51. The processor core 51 may determine that execution of the task is completed by reading the completion queue entry.

In one example, the submission queue 521 may include a runtime submission queue (runtime submission queue, RTSQ) and an active submission queue (active submission queue, ACSQ). The RTSQ is a queue in which the processor core 51 delivers a task to the task scheduler 52, and the ACSQ is a queue in which a task in the RTSQ is mapped to the ACSQ based on a specific scheduling relationship.

Optionally, the notify task includes a plurality of synchronization recording tasks and a plurality of synchronization waiting tasks. A single synchronization recording task in the plurality of synchronization recording tasks is used to record, in the synchronization table 523, a tag corresponding to a single submission queue 521 in the at least one submission queue 521. A single synchronization waiting task in the plurality of synchronization waiting tasks is used to read, in the synchronization table 523, a tag corresponding to an identifier of the single synchronization recording task, and determine whether execution of a task in the single submission queue is completed.

For example, the synchronization task is used to control a dependency relationship in the submission queue 521, and the synchronization task corresponds to a task of collective communication. The synchronization table 523 includes a Notifyid, where the Notifyid is used to store a tag. The tag may be 1, indicating that a wait succeeds, that is, execution of a task is completed. The tag may alternatively be 0, indicating that a wait fails, that is, execution of a task is not completed. The synchronization recording task writes a tag in the Notifyid in the synchronization table 523. The synchronization waiting task reads the tag in a location of the Notifyid in the synchronization table 523. If the tag read by the synchronization waiting task is 1, execution of the task in the single submission queue is completed, and execution of a subsequent task in the submission queue 521 is continued. If the tag read by the synchronization waiting task is 0, execution of the task in the single submission queue 521 is not completed, and execution of a subsequent task in the submission queue 521 is blocked.

Therefore, the synchronization task is set in the task scheduler 52, so that the orchestrated execution sequence of the tasks may be controlled. In this way, execution of the subsequent task is continued when the task is completed, or execution of the subsequent task is blocked when the task is not completed. The processor core 51 does not need to participate in an entire process, and computing efficiency of collective communication can be improved.

Optionally, the task scheduler 52 may further include a scheduler interface 524 and a tag matching engine 525. The scheduler interface 524 corresponds to the first accelerator 53. The task scheduler 52 controls a first submission queue in the at least one submission queue 521 to deliver a task corresponding to the first submission queue to the first accelerator 53 through the scheduler interface 524. When determining that the first accelerator 53 completes execution of the task corresponding to the first submission queue, the task scheduler 52 controls the tag matching engine 525 to execute a first synchronization recording task in the plurality of synchronization recording tasks in the synchronization table 523, and writes a first completion queue entry into the completion queue 522, where the first synchronization recording task is to record, in the synchronization table 523, a first tag corresponding to the first submission queue. The task scheduler 52 further determines, based on the first tag in the synchronization table 523, whether the first synchronization waiting task in the plurality of synchronization waiting tasks is successfully executed, and when determining that the first synchronization waiting task is not successfully executed, blocks a task subsequent to the task corresponding to the first submission queue. When determining, based on a tag corresponding to the at least one submission queue, that all the tasks are successfully executed, the task scheduler 52 schedules and executes a next task of a task corresponding to the at least one submission queue.

In an example, a task delivery process may be as follows: The processor core 51 orchestrates all tasks of collective communication in an expected execution sequence, and delivers the tasks to the at least one submission queue 521 of the task scheduler 52 through the task scheduler drive interface. The task scheduler 52 may schedule the tasks to a corresponding scheduler interface 524 based on a type of a queue head task in the submission queue 521, and then deliver the tasks to the first accelerator 53 corresponding to the scheduler interface 524, to complete the task delivery process.

In an example, a notification process after execution of a task is completed may be as follows: After the first accelerator 53 completes execution, the tag matching engine 525 may execute the first synchronization recording task in the synchronization table 523, and write the first completion queue entry into the completion queue 522. The first synchronization task also writes the first tag into the Notifyid in the synchronization table 523. The task scheduler 52 determines, based on the first tag in the location of the Notifyid, whether the first synchronization waiting task is successfully executed, and the processor core 51 reads the first completion queue entry to determine that execution of the task is completed, and schedules a next task to the task scheduler 52.

Optionally, the all tasks include an inter-chip task and an intra-chip task, and the chip system 50 further includes a second accelerator 54. The first accelerator 53 is configured to execute the inter-chip task in the orchestrated execution sequence of the tasks. The second accelerator 54 is configured to execute the intra-chip task in the orchestrated execution sequence of the tasks.

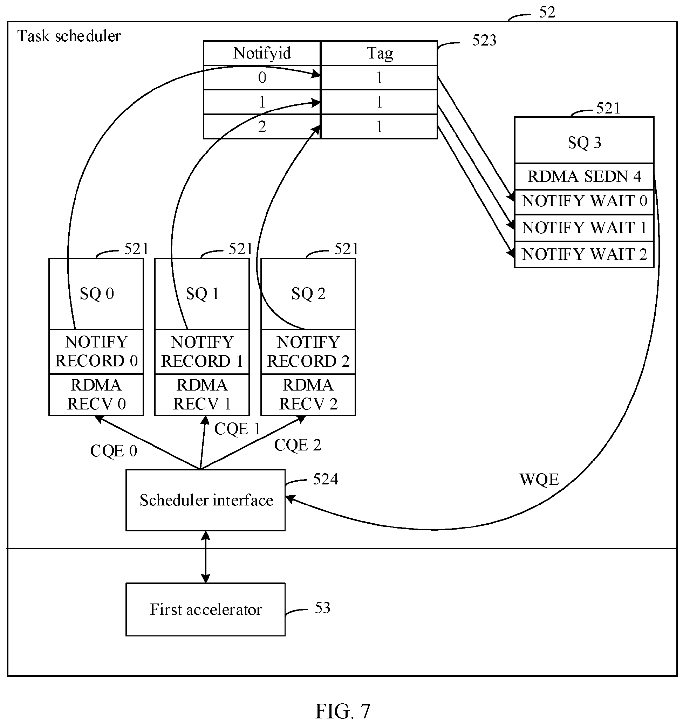

In an example, FIG. 7 is a flowchart of executing an inter-chip task according to an embodiment of this application. The first accelerator 53 may be RDMA, and the inter-chip task includes RDMA RECV 0, RDMA RECV 1, RDMA RECV 2, and RDMA SEND 4, where RDMA SEND 4 needs to be executed after execution of the three tasks RDMA RECV 0 to RDMA RECV 2 is completed. The three tasks RDMA RECV 0 to RDMA RECV 2 are executed out of order, and therefore may be separately placed in an SQ 0, an SQ 1, and an SQ 2. The three tasks RDMA RECV 0 to RDMA RECV 2 receive three pieces of information through RDMA, and then a CQE 0, a CQE 1, and a CQE 2 are generated respectively. Then the three tasks RDMA RECV 0 to RDMA RECV 2 are successfully executed. After execution of the three tasks RDMA RECV 0 to RDMA RECV 2 is completed, synchronization recording tasks 0 to 2 are executed respectively. In other words, a tag is written into a location of the Notifyid corresponding to the synchronization table 523. In this case, the tag is 1. At this time, execution of the synchronization waiting tasks 0 to 2 is also completed, and blocking is relieved. When blocking of the SQ is relieved, the RDMA SEND 4 starts to be executed. A WQE is sent to the scheduler interface 524, and the WQE is delivered to the first accelerator 53 for task execution.

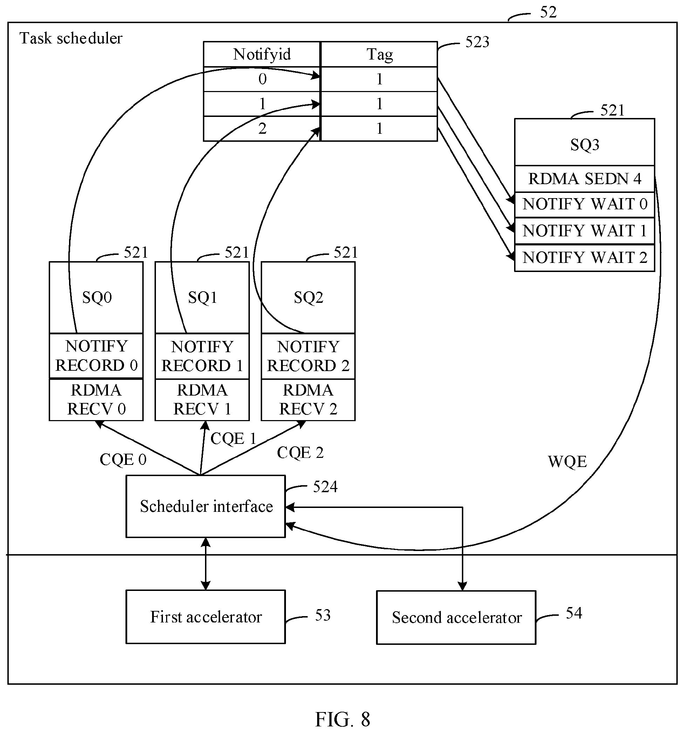

In another example, FIG. 8 is a flowchart of executing an inter-chip task and an intra-chip task according to an embodiment of this application. The first accelerator 53 may be RDMA, and the second accelerator 54 may be system direct memory access (system direct memory access, SDMA). The inter-chip task includes RDMA RECV 0, RDMA RECV 1, and RDMA RECV 2, and the intra-chip task includes RDMA SEND 4. The RDMA SEND 4 needs to be executed after execution of the three tasks RDMA RECV 0 to RDMA RECV 2 is completed. The three tasks RDMA RECV 0 to RDMA RECV 2 are executed out of order, and therefore may be separately placed in an SQ 0, an SQ 1, and an SQ 2. The three tasks RDMA RECV 0 to RDMA RECV 2 receive three pieces of information through the RDMA, and then a CQE 0, a CQE 1, and a CQE 2 are generated respectively. Then execution of the three tasks RDMA RECV 0 to RDMA RECV 2 is completed. After execution of the three tasks RDMA RECV 0 to RDMA RECV 2 is completed, synchronization recording tasks 0 to 2 are executed respectively. In other words, a tag is written into a location of the Notifyid corresponding to the synchronization table 523. In this case, the tag is 1. At this time, execution of the synchronization waiting tasks 0 to 2 is also completed, and blocking is relieved. When blocking of the SQ is relieved, the RDMA SEND 4 starts to be executed. A WQE is sent to the scheduler interface 524, and the WQE is delivered to the second accelerator 54 for task execution.

Therefore, the chip system 50 provided in this embodiment of this application may execute the inter-chip task through the first accelerator 53, and execute the intra-chip task through the second accelerator 54. The chip system may support both intra-chip and inter-chip collective communication, thereby improving applicability of the chip system.

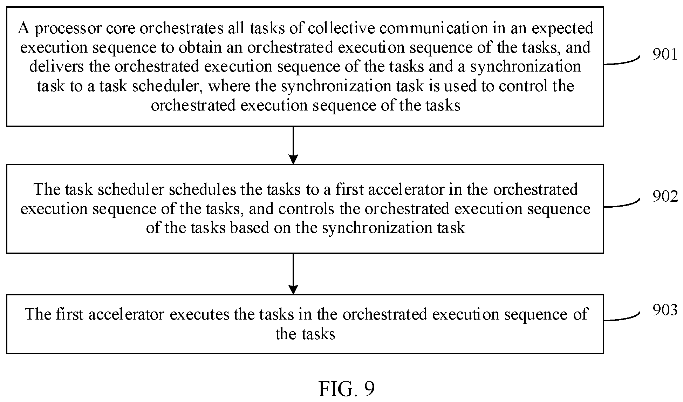

Applied to the chip system in FIG. 5 or the chip system in FIG. 6, an embodiment of this application further provides a collective communication method. FIG. 9 is a flowchart of a collective communication method according to an embodiment of this application. The collective communication method is applied to a chip system, and the chip system includes a processor core, a task scheduler, and a first accelerator. The method includes the following steps.

901: The processor core orchestrates all tasks of collective communication in an expected execution sequence, to obtain an orchestrated execution sequence of the tasks, and delivers the orchestrated execution sequence of the tasks and a synchronization task to the task scheduler, where the synchronization task is used to control the orchestrated execution sequence of the tasks.

902: The task scheduler schedules the tasks to the first accelerator in the orchestrated execution sequence of the tasks, and controls the orchestrated execution sequence of the tasks based on the synchronization task.

903. The first accelerator executes the tasks in the orchestrated execution sequence of the tasks.

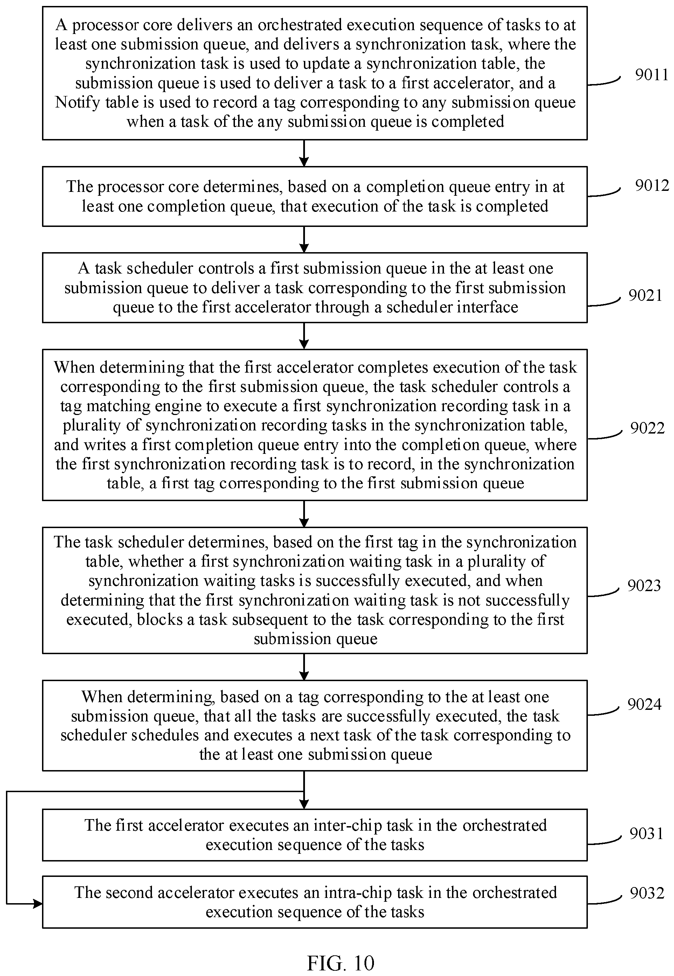

Optionally, the task scheduler includes a scheduler interface and a tag matching engine. FIG. 10 is a flowchart of another collective communication method according to an embodiment of this application.

The task scheduler includes at least one submission queue, at least one completion queue, and a synchronization table. Step 901 includes the following steps.

9011: The processor core delivers the orchestrated execution sequence of the tasks to the at least one submission queue, and delivers the synchronization task, where the synchronization task is used to update the synchronization table, the submission queue is used to deliver a task to the first accelerator, and the synchronization table is used to record a tag corresponding to any submission queue when a task in any submission queue is completed.

9012: The processor core determines, based on a completion queue entry in the at least one completion queue, that execution of the task is completed.

The task scheduler further includes a scheduler interface and a tag matching engine. Step 902 includes the following steps.

9021: The task scheduler controls a first submission queue in the at least one submission queue to deliver a task corresponding to the first submission queue to the first accelerator through the scheduler interface.

9022: When determining that the first accelerator completes execution of the task corresponding to the first submission queue, the task scheduler controls the tag matching engine to execute a first synchronization recording task in the plurality of synchronization recording tasks in the synchronization table, and writes a first completion queue entry into the completion queue, where the first synchronization recording task is to record, in the synchronization table, a first tag corresponding to the first submission queue.

9023: The task scheduler determines, based on the first tag in the synchronization table, whether a first synchronization waiting task in the plurality of synchronization waiting tasks is successfully executed, and when determining that the first synchronization waiting task is not successfully executed, blocks a task subsequent to the task corresponding to the first submission queue.

9024: When determining, based on a tag corresponding to the at least one submission queue, that all the tasks are successfully executed, the task scheduler schedules and executes a next task of a task corresponding to the at least one submission queue.

The all tasks include an inter-chip task and an intra-chip task, and the chip system further includes a second accelerator. Step 903 includes the following steps.

9031: The first accelerator executes the inter-chip task in the orchestrated execution sequence of the tasks.

9031: The second accelerator executes the intra-chip task in the orchestrated execution sequence of the tasks.

It should be noted that all related content of the steps in the foregoing method embodiments may be cited in function description of corresponding function modules. Details are not described herein again.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, such as a radio frequency circuit, a Bluetooth chip, or a Wi-Fi chip.

An embodiment of this application further provides a computer storage medium. The computer storage medium stores computer instructions. When the computer instructions are run on an electronic device, the electronic device is enabled to perform the related method steps, to implement the collective communication method in the foregoing embodiments.

An embodiment of this application further provides a computer program product. When the computer program product is run on a computer, the computer is enabled to perform the foregoing related steps, to implement the collective communication method performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the collective communication method performed by the electronic device in the foregoing embodiments.

The chip system, the computer storage medium, the computer program product, or the chip provided in embodiments may be all configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A chip system, comprising a processor core, a task scheduler, and a first accelerator, wherein
the processor core is configured to: orchestrate all tasks of collective communication in an expected execution sequence, to obtain an orchestrated execution sequence of the tasks, and deliver the orchestrated execution sequence of the tasks and a synchronization task to the task scheduler, wherein the synchronization task is used to control the orchestrated execution sequence of the tasks;
the task scheduler is configured to: schedule the tasks to the first accelerator in the orchestrated execution sequence of the tasks, and control the orchestrated execution sequence of the tasks based on the synchronization task; and
the first accelerator is configured to execute the tasks in the orchestrated execution sequence of the tasks.

2. The system according to claim 1, wherein the task scheduler comprises at least one submission queue, at least one completion queue, and a synchronization table; and
the processor core is configured to:
deliver the orchestrated execution sequence of the tasks to the at least one submission queue, and deliver the synchronization task, wherein the synchronization task is used to update the synchronization table, the submission queue is used to deliver a task to the first accelerator, and the synchronization table is used to record a tag corresponding to any submission queue when a task in any submission queue is completed; and
determine, based on a completion queue entry in the at least one completion queue, that execution of the task is completed.

3. The system according to claim 2, wherein
the synchronization task comprises a plurality of synchronization recording tasks and a plurality of synchronization waiting tasks, wherein
a single synchronization recording task in the plurality of synchronization recording tasks is used to record, in the synchronization table, a tag corresponding to a single submission queue in the at least one submission queue; and
a single synchronization waiting task in the plurality of synchronization waiting tasks is used to read, in the synchronization table, a tag corresponding to an identifier of the single synchronization recording task, and determine whether execution of a task in the single submission queue is completed.

4. The system according to claim 3, wherein the task scheduler further comprises a scheduler interface and a tag matching engine, and the scheduler interface corresponds to the first accelerator; and
the task scheduler is configured to:
control a first submission queue in the at least one submission queue to deliver a task corresponding to the first submission queue to the first accelerator through the scheduler interface;
when determining that the first accelerator completes execution of the task corresponding to the first submission queue, control the tag matching engine to execute a first synchronization recording task in the plurality of synchronization recording tasks in the synchronization table, and write a first completion queue entry into the completion queue, wherein the first synchronization recording task is to record, in the synchronization table, a first tag corresponding to the first submission queue;
determine, based on the first tag in the synchronization table, whether a first synchronization waiting task in the plurality of synchronization waiting tasks is successfully executed, and when determining that the first synchronization waiting task is not successfully executed, block a task subsequent to the task corresponding to the first submission queue; and
when determining, based on a tag corresponding to the at least one submission queue, that all the tasks are successfully executed, schedule and execute a next task of a task corresponding to the at least one submission queue.

5. The system according to any one of claims 1 to 4, wherein all the tasks comprise an inter-chip task and an intra-chip task, and the chip system further comprises a second accelerator;
the first accelerator is configured to execute the inter-chip task in the orchestrated execution sequence of the tasks; and
the second accelerator is configured to execute the intra-chip task in the orchestrated execution sequence of the tasks.

6. A collective communication method, wherein the method is applied to a chip system, the chip system comprises a processor core, a task scheduler, and a first accelerator, and the method comprises:
orchestrating, by the processor core, all tasks of collective communication in an expected execution sequence, to obtain an orchestrated execution sequence of the tasks, and delivering the orchestrated execution sequence of the tasks and a synchronization task to the task scheduler, wherein the synchronization task is used to control the orchestrated execution sequence of the tasks;
scheduling, by the task scheduler, the tasks to the first accelerator in the orchestrated execution sequence of the tasks, and controlling the orchestrated execution sequence of the tasks based on the synchronization task; and
executing, by the first accelerator, the tasks in the orchestrated execution sequence of the tasks.

7. The method according to claim 6, wherein the task scheduler comprises at least one submission queue, at least one completion queue, and a synchronization table; and the orchestrating, by the processor core, all tasks of collective communication in an expected execution sequence, to obtain an orchestrated execution sequence of the tasks, and delivering the orchestrated execution sequence of the tasks and a synchronization task to the task scheduler, wherein the synchronization task is used to control the orchestrated execution sequence of the tasks comprises:
delivering, by the processor core, the orchestrated execution sequence of the tasks to the at least one submission queue, and delivering the synchronization task, wherein the synchronization task is used to update the synchronization table, the submission queue is used to deliver a task to the first accelerator, and the synchronization table is used to record a tag corresponding to any submission queue when a task in any submission queue is completed; and
determining, by the processor core based on a completion queue entry in the at least one completion queue, that execution of the task is completed.

8. The method according to claim 7, wherein
the synchronization task comprises a plurality of synchronization recording tasks and a plurality of synchronization waiting tasks, wherein
a single synchronization recording task in the plurality of synchronization recording tasks is used to record, in the synchronization table, a tag corresponding to a single submission queue in the at least one submission queue; and
a single synchronization waiting task in the plurality of synchronization waiting tasks is used to read, in the synchronization table, a tag corresponding to an identifier of the single synchronization recording task, and determine whether execution of a task in the single submission queue is completed.

9. The method according to claim 8, wherein the task scheduler further comprises a scheduler interface and a tag matching engine, and the scheduler interface corresponds to the first accelerator; and the scheduling, by the task scheduler, the tasks to the first accelerator in the orchestrated execution sequence of the tasks, and controlling the orchestrated execution sequence of the tasks based on the synchronization task comprises:
controlling, by the task scheduler, a first submission queue in the at least one submission queue to deliver a task corresponding to the first submission queue to the first accelerator through the scheduler interface;
when determining that the first accelerator completes execution of the task corresponding to the first submission queue, controlling, by the task scheduler, the tag matching engine to execute a first synchronization recording task in the plurality of synchronization recording tasks in the synchronization table, and writing a first completion queue entry into the completion queue, wherein the first synchronization recording task is to record, in the synchronization table, a first tag corresponding to the first submission queue;
determining, by the task scheduler based on the first tag in the synchronization table, whether a first synchronization waiting task in the plurality of synchronization waiting tasks is successfully executed, and when determining that the first synchronization waiting task is not successfully executed, blocking a task subsequent to the task corresponding to the first submission queue; and
when determining, based on a tag corresponding to the at least one submission queue, that all the tasks are successfully executed, scheduling and executing, by the task scheduler, a next task of a task corresponding to the at least one submission queue.

10. The method according to any one of claims 6 to 9, wherein all the tasks comprise an inter-chip task and an intra-chip task, and the chip system further comprises a second accelerator;
executing, by the first accelerator, the inter-chip task in the orchestrated execution sequence of the tasks; and executing, by the second accelerator, the intra-chip task in the orchestrated execution sequence of the tasks.

11. A computer-readable storage medium, comprising computer instructions, wherein when the computer instructions are run on an electronic device, the electronic device is enabled to perform the method according to any one of claims 6 to 10.

12. A computer program product, wherein when the computer program product is run on a computer or a processor, the computer or the processor is enabled to perform the method according to any one of claims 6 to 10.
